# EUROPÄISCHE PATENTANMELDUNG

(11) **EP 4 368 900 A1**
(43) Veröffentlichungstag der Anmeldung: **15.05.2024**
(21) Anmeldenummer: 22207202.7
(22) Anmeldetag: 14.11.2022
(51) Int. Cl.: F24D 19/10, F16K 37/00, F16K 31/02, F16K 31/524, G05D 23/19

(54) **STELLANTRIEB FÜR EIN STELLVENTIL**

(71) Anmelder: Eazy Systems GmbH, 31162 Bad Salzdetfurth (DE)
(72) Erfinder: SEELMANN, Florian, 31188 Holle (DE); SEELMANN, Till, 31188 Holle (DE)
(74) Vertreter: Holz, Christian

(57) **Zusammenfassung**

Die vorliegende Erfindung betrifft einen Normally-Open-(NO-)Stellantrieb (2) für ein Stellventil (12) mit einem Stellelement (25), welches ausgebildet ist, das Stellventil (12) mittels einer Kraft entlang der Längsachse (X) zu betätigen. Der NO-Stellantrieb (2) ist dadurch gekennzeichnet, dass das Stellelement (25) ausgebildet ist, die Kraft abweichend zur Längsachse (X) auszuüben, wobei ein Kraftumlenkelement (27) ausgebildet ist, die Kraft vom Stellelement (25) zu erhalten und mittels eines Stößels (26) entlang der Längsachse (X) auf das Stellventil (12) zu übertragen.

## Beschreibung

Die vorliegende Erfindung betrifft einen Normally-Open-(NO-)Stellantrieb für ein Stellventil.

Für verschiedene technische Anwendungen kann es erforderlich sein, den Durchfluss eines Fluids durch eine Fluidleitung zu regulieren. Hierfür können sogenannte Stellventile verwendet werden, welche auch als Regelarmaturen bezeichnet werden können. Das Stellventil kann zwischen einer vollkommen geöffneten und einer vollkommen geschlossenen Stellung stufenlos eingestellt werden und so den Durchfluss des Fluids durch sich hindurch verändern. Hierdurch können je nach technischer Anwendung zum Beispiel der Druck, die Temperatur oder die Durchflussmenge beeinflusst werden. Derartige Fluide können Gase sowie Flüssigkeiten sein. Derartige Stellventile können beispielsweise in Gebäuden bei Warmwasserheizungsanlagen sowie in der Gebäudeleittechnik verwendet werden. Mit anderen Worten können derartige Stellventile in der Heizungs-, Klima- und bzw. oder Lüftungstechnik eingesetzt werden. Die Veränderung der Einstellung des Stellventils kann mittels eines Antriebs erfolgen, welcher entsprechend als Stellantrieb bezeichnet und zum Beispiel elektrisch oder pneumatisch betrieben werden kann.

Zur Regulierung der Temperatur einzelner Räume eines Gebäudes können derartige Stellventile bei Fußbodenheizungen als die Ventile des Heizkreisverteilers verwendet werden. Einzelne Stellventile können auch bei einem jeweiligen Heizkörper bzw. Radiator als dessen Ventil eingesetzt werden. Entsprechend dieser Anwendung können derartige Stellventile auch als thermische Stellventile und deren Antriebe entsprechend als thermische Stellantriebe bezeichnet werden. In beiden Fällen sind die Stellventile üblicherweise mit einem Fluidkreislauf in Form des Rücklaufs des Heizungskreislaufs verbunden, um je nach Ventilstellung, welche mittels des thermischen Stellantriebs eingenommen werden kann, eine vorbestimmte Menge des Heizungswassers in den Heizkörper bzw. in die Rohre eines Abschnitts der Fußbodenheizung einströmen zu lassen. Die Stellung des Stellventils kann hierzu mittels des jeweiligen Stellantriebs von einem Thermostat in Abhängigkeit einer erfassten Raumtemperatur vorgegeben werden, sodass eine vom Benutzer vorgegebene Solltemperatur des Raums erreicht und eingehalten werden kann.

Hinsichtlich der Funktionsweise derartiger Stellantriebe und Stellventile ist dabei zu beachten, dass üblicherweise das Stellventil eine vergleichsweise schwache Ventilfeder bzw. Rückstellfeder aufweist, mittels dessen Federkraft ein Stößel des Stellventils entlang derselben Längsachse bewegt und hierdurch das Stellventil fluidführend geöffnet werden kann. Derartige Stellventile werden somit durch die Federkraft ihrer eigenen Stellfeder vollständig geöffnet und können so das Fluid hindurchlassen.

Wird ein Stellantrieb am Stellventil montiert, so wirkt nun der Federkraft des Stellventils eine einstellbare Kraft des Stellantriebs entgegen, wodurch die stufenlose Regulierung des Maßes erfolgen kann, wie sehr das Stellventil fluidführend geöffnet bzw. geschlossen ist. Die Kraftübertragung bzw. das Zusammenwirken zwischen Stellantrieb und Stellventil erfolgt über einen Stößel des Stellantriebs, welcher entlang der gemeinsamen Längsachse mit einem Stößel des Stellventils, auch Ventilstößel genannt, zusammenwirkt.

Bei thermischen Stellantrieben unterscheidet man dabei grundsätzlich zwischen zwei Bauformen bzw. zwei Funktionsprinzipien:
1. NC (normally closed): ist der Stellantrieb auf dem Stellventil montiert und ist der Stellantrieb nicht aktiviert, so ist das Stellventil geschlossen.
2. NO (normally open): ist der Stellantrieb auf dem Stellventil montiert und ist der Stellantrieb nicht aktiviert, so ist das Stellventil geöffnet.

Bei thermischen NC-Stellantrieben wirkt der Federkraft der Rückstellfeder des Stellventils eine vergleichsweise starke Druckfeder des NC-Stellantriebs entgegen, d.h. die Federkraft des NC-Stellantriebs ist größer als die Federkraft der Rückstellfeder des Stellventils, sodass das Stellventil grundsätzlich, d. h. im Normalzustand, von dem NC-Stellantrieb geschlossen wird. Die Federkraft der Druckfeder des NC-Stellantriebs, welche auch als Schließkraft des NC-Stellantriebs bezeichnet wird, liegt üblicherweise bei ca. 100 N.

Ein NC-Stellantrieb weist ferner ein Stellelement auf, welches bei Betätigung eine zusätzliche Kraft auf die Druckfeder des NC-Stellantriebs ausüben und hierdurch die Bewegung der Rückstellfeder des Stellventils unterstützen kann. Somit können bei Betätigung des Stellelements des NC-Stellantriebs das Stellelement des NC-Stellantriebs und die Rückstellfeder des Stellventils gemeinsam die vergleichsweise starke Federkraft der Druckfeder des NC-Stellantriebs überwinden und hierdurch das Stellventil öffnen. Das Stellelement des NC-Stellantriebs kann beispielsweise mittels eines elektrischen Heizwiderstands in Kombination mit einem temperaturabhängigen Dehnkörper bzw. Dehnstoffelement umgesetzt werden, siehe beispielsweise DE 31 40 472 C2.

Vorteilhaft ist hierbei die vergleichsweise einfache und bzw. oder kompakte Umsetzung der Ausübung der Antriebskraft bzw. der Stellkraft des NC-Stellantriebs. Dies kann die Kosten und bzw. oder den Bauraum des NC-Stellantriebs geringhalten.

Vorteilhaft ist insbesondere daran, dass die Federkraft der Druckfeder des NC-Stellantriebs größer als die Federkraft der Rückstellfeder des Stellventils ist, dass bei einem unbetätigten bzw. unbestromten Stellelement des NC-Stellantriebs das Stellventil in der Normalstellung geschlossen ist. Wird davon ausgegangen, dass in der meisten Zeit der Nutzung zum Beispiel einer Heizungsanlage kein Wärmebedarf besteht, so kann dadurch, dass das Stellventil des NC-Stellantriebs im Normalzustand geschlossen ist und der Heizwiderstand des Stellelements des NC-Stellantriebs stromlos bleibt, der Energieverbrauch des Stellantriebs geringgehalten werden.

Um zu erkennen, ob das Stellventil geschlossen oder geöffnet ist, sind NC-Stellantriebe oftmals mit einer sogenannten Hubanzeige ausgestattet. Diese ist mit dem Stößel des NC-Stellantriebs verbunden, welcher auf den Ventilstößel drückt. Die Hubanzeige ist so ausgelegt, dass bei der Montage des NC-Stellantriebs, bei der das Stellventil geschlossen wird, die Hubanzeige etwas aus dem Gehäuse des NC-Stellantrieb herausbewegt wird und damit die korrekte Montage sowie das geschlossene Stellventil anzeigt. Wenn nun der NC-Stellantrieb aktiviert wird, wird das Stellventil geöffnet. Dabei fährt die Hubanzeige des NC-Stellantriebs entlang der Längsachse in Richtung des Öffnens des Stellventils weiter aus dem Gehäuse des NC-Stellantriebs heraus, bis das Stellventil vollständig geöffnet ist. Entsprechend ragt die Hubanzeige deutlich aus dem Gehäuse des NC-Stellantriebs hervor, falls das Stellventil geöffnet ist, und die Hubanzeige ragt nur geringfügig aus dem Gehäuse des NC-Antriebs hervor, falls das Stellventil geschlossen ist.

Bei thermischen NO-Stellantrieben wird bisher die Schließkraft direkt vom Stellelement auf das Stellventil übertragen. Eine zusätzliche Druckfeder wie bei NC-Stellantrieben, dessen Federkraft vom Stellelement überwunden werden bzw. welcher das Stellelement entgegenwirken muss, ist bei NO-Stellantrieben nicht vorhanden. Dies kann Kosten und Bauraum sparen. Auch kann so ein Typ von Stellantrieben geschaffen werden, welcher das Stellventil offen lässt, wenn der NO-Stellantrieb nicht betrieben wird.

Nachteilig ist bei NO-Stellantrieben jedoch, dass die Stellkraft, üblicherweise ebenfalls ca. 100 N, und der Stellweg des Stellelements oftmals sehr viel größer sind als der für den Ventilstößel des Stellventils benötigte Stellweg und Schließkraft. Somit besteht die Gefahr, dass der Ventilstößel des Stellventils durch die viel zu hohe Stellkraft des Stellelements des NO-Stellantriebs beschädigt wird.

Um derart verursachte Beschädigungen des Ventilstößels des Stellventils zu verhindern, wird das Stellelement bei NO-Stellantrieben daher federnd gelagert. Diese Feder des NO-Stellantriebs ist so dimensioniert und vorgespannt, dass nach dem Erreichen der vorgesehenen Schließkraft von üblicherweise ca. 100 N der restliche Stellweg und die restliche Stellkraft des Stellelements von der Feder des NO-Stellantriebs aufgefangen werden. Das bedeutet, dass sich das Stellelement des NO-Stellantriebs gegen dessen Feder vom Ventilstößel des Stellventils wegbewegt.

Bei dieser Bauform der NO-Stellantriebe ist es somit nicht möglich, eine eindeutige Hubanzeige zu realisieren, insbesondere nicht mit so einfachen Mittel wie bei NC-Stellantrieben. Die Hubanzeige von NO-Stellantrieben kann zwar so ausgelegt sein, dass die Hubanzeige im Moment des Schließens des Ventilstößels des Stellventils die gleiche richtige Stellung wie bei dem geschlossenen Zustand der NC-Stellantriebe anzeigt. Da aber der Stellweg des Stellelements bei NO-Stellantrieben größer als der Stellweg des Ventilstößels des Stellventils ist, würde bei NO-Stellantrieben der von dessen Feder aufgefangene Stellweg des Stellelements dazu führen, dass sich die Hubanzeige des NO-Stellantriebs bis zum vollständigen Schließen des Stellventils in ihrer Positionierung gegenüber dem Gehäuse des NO-Stellantriebs nicht verändert aber nach dem vollständigen Schließen des Stellventils aus dem Gehäuse des NO-Stellantriebs heraus verfährt. Damit zeigt die Hubanzeige des NO-Stellantriebs die Stellung des Stellelements und nicht die Stellung des Stellventils an. Die Hubanzeige des NO-Stellantriebs entspricht somit der Stellung des Stellventils "Ventil geöffnet" eines NC-Stellantriebs, obwohl der Ventilstößel des Stellventils geschlossen ist.

Eine Aufgabe der vorliegenden Erfindung ist es, die Möglichkeiten der Realisierung eines Normally-Open-Stellantriebs für ein Stellventil zu erweitern. Insbesondere soll ein Normally-Open-Stellantrieb für ein Stellventil zur Verfügung gestellt werden, so dass eine Hubanzeige die Stellung des Stellventils wie bei einem Normally-Close-Stellantrieb anzeigen kann. Dies soll insbesondere für ein Stellventil eines Fluidverteilers, insbesondere eines Heizkreisverteilers, erfolgen. In jedem Fall soll dies insbesondere möglichst einfach, kostengünstig und bzw. oder bauraumsparend erfolgen können. Zumindest soll eine Alternative zu bekannten derartigen Möglichkeiten geschaffen werden.

Die Aufgabe wird erfindungsgemäß durch einen Normally-Open-Stellantrieb für ein Stellventil sowie durch einen Fluidverteiler mit den Merkmalen der unabhängigen Ansprüche gelöst. Vorteilhafte Weiterbildungen sind in den Unteransprüchen beschrieben.

Somit betrifft die vorliegende Erfindung einen Normally-Open-(NO-)Stellantrieb für ein Stellventil mit einem Stellelement, welches ausgebildet ist, das Stellventil mittels einer Kraft entlang der Längsachse zu betätigen. Derartige NO-Stellantriebe sind aus dem Stand der Technik bekannt, wie eingangs beschrieben.

Der erfindungsgemäße NO-Stellantrieb ist dadurch gekennzeichnet, dass das Stellelement ausgebildet ist, die Kraft abweichend zur Längsachse auszuüben, wobei ein Kraftumlenkelement ausgebildet ist, die Kraft vom Stellelement zu erhalten und mittels eines Stößels entlang der Längsachse auf das Stellventil zu übertragen. Somit übt das Stellelement seine Kraft als Druckkraft oder als Zugkraft nicht entlang der Längsachse auf den Stößel aus, d.h. die Richtung der Kraftausübung des Stellelements entspricht nicht der Längsachse. Um aber mittels der Kraft des Stellelements dennoch den Stößel entlang der Längsachse auf das Stellventil wirken zu lassen, ist das Kraftumlenkelement vorgesehen, welche die Kraft des Stellelements auf die Längsachse umlenkt.

Das Stellelement kann ein beliebiges Element sein, welches eine veränderliche Druckkraft oder auch eine veränderliche Zugkraft erzeugen kann. Dies kann insbesondere stufenlos erfolgen. Die Kraft kann beispielsweise durch einen elektrischen Strom aber auch pneumatisch oder hydraulisch erzeugt werden. Insbesondere kann das Stellelement mittels elektrischen Stroms betrieben und eine Kraft insbesondere als Druck proportional zum angelegten elektrischen Strom bzw. zur angelegten elektrischen Spannung erzeugt werden. Dies kann insbesondere mittels eines Dehnstoffelements bzw. Dehnkörper umgesetzt werden, wie weiter unten noch näher erläutert werden wird.

Das Kraftumlenkelement kann ein jegliches Element sein, welches in der Lage ist, eine linear gerichtete Kraft auf der einen Seite vom Stellelement zu erhalten, d.h. auf sich einwirken zu lassen, und diese Kraft auf der anderen Seite wieder an einen Stößel abzugeben, d.h. auf den Stößel zu drücken, so dass der Stößel entlang der Längsachse auf das Stellventil drücken kann. Dabei weichen die beiden linearen Richtungen der einwirkenden Kraft und der abgebenden Kraft des Kraftumlenkelements voneinander ab. Hierdurch kann das Stellelement die Kraft abweichend zur Längsachse erzeugen und der Stößel die Kraft entlang der Längsachse erhalten sowie übertragen. Dies kann insbesondere für die Übertragung einer Druckkraft in dieser Form erfolgen.

Das Kraftumlenkelement kann hierzu insbesondere als Hebelelement ausgebildet sein, wie weiter unten noch näher erläutert werden wird. Das Kraftumlenkelement kann aber auch durch jegliches andere Element bzw. durch eine Kombination aus Elementen umgesetzt werden, welche eine Übertragung einer Kraft von einer linearen Richtung in eine andere lineare Richtung ermöglichen. Dies kann beispielsweise mittels eines inkompressiblen Fluids wie beispielsweise einer Flüssigkeit, insbesondere einer Hydraulikflüssigkeit, entlang einer Fluidleitung wie beispielsweise eines Schlauches, Rohres oder dergleichen erfolgen. Dies kann ebenso mit anderen geeigneten Übertragungsmitteln erfolgen.

In jedem Fall kann es hierdurch ermöglicht werden, das Stellelement eines NO-Stellantriebs nicht, wie bisher bekannt, entlang der Längsachse des Stellventils anzuordnen und somit seine Kraft direkt entlang der Längsachse mittels eines Stößels auf das Stellventil ausüben zu lassen. Vielmehr kann es erfindungsgemäß ermöglicht werden, das Stellelement eines NO-Stellantriebs abweichend zur Längsachse anzuordnen und die vom Stellelement erzeugbare lineare Kraft mittels des Kraftumlenkelements wieder auf die Längsachse umzulenken und dort, wie bisher bekannt, mittels des Stößels auf des Stellventil wirken zu lassen. Dies kann die Freiheiten erhöhen, das Stellelement seitens des NO-Stellantriebs anzuordnen. Dies kann die Gestaltungsmöglichkeiten eines NO-Stellantriebs erweitern.

Vorteilhaft ist hierbei insbesondere, dass das Stellelement eines NO-Stellantriebs derart auf den Stößel wirken kann, dass eine Hubanzeige, welche die Stellung des Stößels anzeigen kann, beispielsweise wie bei Normally-Closed-(NC-)Stellantrieben vorgesehen werden kann, was eine einfache und direkte Anzeige des Hubes des Stößels und damit des Stellventil für den Benutzer ermöglichen kann. Dies ist bei den bekannten NO-Stellantrieben wie eingangs beschrieben bisher nicht der Fall.

Gemäß einem Aspekt der Erfindung weist der NO-Stellantrieb eine Hubanzeige auf, welche ausgebildet ist, eine Stellung des Stößels entlang der Längsachse, vorzugsweise relativ zu einem Gehäuse, anzuzeigen. Eine derartige Hubanzeige kann ein Element sein, welches relativ zu einem weiteren Element des NO-Stellantriebs, insbesondere zu dessen Gehäuse, derart bewegt werden kann, dass ein Benutzer außen am NO-Stellantrieb die Stellung des Stößels entlang der Längsachse erkennen bzw. ablesen kann. Dies kann durch die Stellung des Elements selbst, beispielsweise durch einen bündigen Abschluss mit dem weiteren Element bzw. mit dem Gehäuse bzw. durch ein geringfügiges Hervorragen gegenüber dem weiteren Element bzw. gegenüber dem Gehäuse des NO-Stellantriebs auf der einen Seite, beispielsweise zum Anzeigen des vollständig geschlossenen Stellventils, und durch ein signifikantes Hervorragen gegenüber dem weiteren Element bzw. gegenüber dem Gehäuse des NO-Stellantriebs auf der anderen Seite, beispielsweise zum Anzeigen des vollständig geöffneten Stellventils, erfolgen, wie dies bei Normally-Closed-(NC-)Stellantrieben der Fall ist.

In jedem Fall kann hierdurch, wie zuvor bereits erwähnt, die Hubanzeige unabhängig vom Stellelement bewegt und stattdessen mit der Bewegung des Stößels entlang der Längsachse verknüpft werden, um die Stellung des Stößels, beispielsweise wie bei NC-Stellantrieben, anzeigen zu können. Dies kann das Verständnis für den Benutzer erleichtern bzw. überhaupt erst eine derartige Anzeigemöglichkeit schaffen.

Gemäß einem weiteren Aspekt der Erfindung ist die Hubanzeige feststehend, vorzugsweise einstückig, mit dem Stößel ausgebildet. Dies kann den Aufwand der Umsetzung reduzieren und bzw. oder sicherstellen, dass die Hubanzeige der Stellung des Stößels entlang der Längsachse entspricht.

Gemäß einem weiteren Aspekt der Erfindung ist das Stellelement ausgebildet, die Kraft als Druckkraft parallel zur Längsachse vom Stellventil wegzeigend auszuüben. Dies kann eine Möglichkeit der Umsetzung darstellen. Wird dabei das Stellelement senkrecht zur Längsachse neben dem Stößel angeordnet, so kann eine entlang der Längsachse vergleichsweise kompakte Bauweise erreicht werden.

Auch kann diese Anordnung die Verwendung eines Hebelelements als Kraftumlenkelement begünstigen, wie weiter unten noch näher beschrieben werden wird.

Gemäß einem weiteren Aspekt der Erfindung ist das Stellelement ein Dehnstoffelement, welches ausgebildet ist, durch elektrische Erwärmung das Stellventil mittels der Kraft als Druckkraft entlang der Längsachse zu betätigen. Dies kann eine Möglichkeit der Umsetzung darstellen. Insbesondere können die Eigenschaften und Vorteile von elektrisch betreibbaren Dehnkörpern bzw. Dehnstoffelementen so bei dem erfindungsgemäßen NO-Stellantrieb umgesetzt und genutzt werden.

Gemäß einem weiteren Aspekt der Erfindung ist das Dehnstoffelement ausgebildet, sich durch elektrische Erwärmung linear auszudehnen und hierdurch einen Kolben linear von sich weg zu bewegen, wobei der Kolben ausgebildet ist, die lineare Ausdehnung des Dehnstoffelements linear auf das Kraftumlenkelement zu übertragen. Dies kann eine konkrete Möglichkeit der Umsetzung sein, mittels des Stellelements in Form eines Dehnstoffelements eine lineare Bewegung zu erzeugen, um eine Druckkraft auf das Kraftumlenkelement auszuüben.

Gemäß einem weiteren Aspekt der Erfindung ist das Kraftumlenkelement ein Hebelelement. Unter einem Hebelelement kann jegliches starres, vorzugsweise stabförmiges, Element bzw. Bauteil verstanden werden, welches um eine Achse oder um einen Punkt drehbar ist und mit dessen Hilfe Kräfte übertragen werden können. Die Achse oder der Punkt der Drehbeweglichkeit kann an einem Gestell oder Gehäuse des NO-Stellantriebs angeordnet sein. Diese Übertragung von Kräften erfolgt ausgehend von der Kraft des Stellelements und resultiert in der Kraft, welche vom Stößel aufgenommen und an das Stellventil weitergeleitet wird. Vorzugsweise kann in der entgegengesetzten Richtung eine Kraft eines Federelements, welches weiter unten noch näher beschrieben werden wird, auf das Hebelelement wirken, um der Kraft des Stellelements entgegenzuwirken. Diese Art der Kraftübertragung ist sowohl als Druckkraft als auch als Zugkraft möglich.

In jedem Fall kann ein Hebelelement eine vergleichsweise einfache und verlässliche Möglichkeit darstellen, die Kraftumlenkung wie zuvor beschrieben umzusetzen. Insbesondere kann ein Hebelelement dies besonders wirkungsvoll ermöglichen, falls das Stellelement ausgebildet ist, die Kraft bzw. die Druckkraft parallel zur Längsachse vom Stellventil wegzeigend auszuüben.

Gemäß einem weiteren Aspekt der Erfindung weist der NO-Stellantrieb ein Federelement auf, welches ausgebildet ist, der Kraft des Stellelements entgegenzuwirken. Hierdurch kann eine Rückstellkraft entgegen der Kraft des Stellelements erzeugt werden, so dass das Federelement des Stellventils den Stößel des NO-Stellantriebs entgegen der Richtung der Kraft des NO-Stellantriebs wieder zurückdrücken kann. Je nach Wechselwirkung der Kräfte von Federelement und Stellelement des NO-Stellantriebs sowie Rückstellfeder des Stellventil kann der Ventilstößel des Stellventil entlang der Längsachse positioniert und damit der Leitungsanschluss des Stellventils stufenlos geöffnet und geschlossen werden. Hierzu kann das Federelement des NO-Stellantriebs an einer beliebigen Stelle im Kraftfluss zwischen dem Stellelement des NO-Stellantriebs und dem Stellventil angeordnet sein.

Gemäß einem weiteren Aspekt der Erfindung ist das Federelement im Kraftfluss zwischen dem Kraftumlenkelement und dem Stellventil angeordnet. Dies kann eine konkrete Umsetzung darstellen. Insbesondere kann dies eine vergleichsweise kompakte Anordnung begünstigen, wie nachfolgend näher beschrieben werden wird.

Gemäß einem weiteren Aspekt der Erfindung weist der NO-Stellantrieb ein Führungselement auf, welches ausgebildet ist, die Kraft des Federelements, vorzugsweise entlang der Längsachse, auf das Kraftumlenkelement zu übertragen. Dies kann eine Möglichkeit einer entsprechenden Kraftübertragung darstellen.

Gemäß einem weiteren Aspekt der Erfindung ist das Führungselement ferner ausgebildet, den Stößel entlang der Längsachse beweglich zu führen. Dies kann eine entsprechende Führung des Stößels bei seinen Bewegungen entlang der Längsachse ermöglichen. Dies kann gleichzeitig die Anzahl der hierfür erforderlichen Bauelemente geringhalten, da das Führungselement mehrere Funktionen übernehmen kann. Dabei kann der Stößel entlang der Längsachse in einem gewissen Maße gegenüber dem Führungselement beweglich sein, wobei dieses Maß der Beweglichkeit durch einen mechanischen Formschluss, beispielsweise durch einen radialen Vorsprung und ein entsprechende Langloch entlang der Längsachse, umgesetzt werden kann, was einfach, kompakt und verlässlich sein kann. In jedem Fall kann dies eine gewissen Relativbewegung zwischen Stößel und Führungselement ermöglichen, um Toleranzen und Spiel auszugleichen und bzw. oder um überschüssige Kräfte vom Stößel und damit auch von Stellventil fernzuhalten, wie weiter unten noch näher beschrieben werden wird.

Gemäß einem weiteren Aspekt der Erfindung umschließt das Führungselement den Stößel in der Umfangsrichtung und das Federelement umschließt das Führungselement in der Umfangsrichtung. Dies kann eine besonders kompakte Bauweise darstellen.

Gemäß einem weiteren Aspekt der Erfindung ist zwischen dem Führungselement und dem Stößel entlang der Längsachse eine Stößelfeder angeordnet, so dass das Führungselement und der Stößel entlang der Längsachse federbelastet zueinander beweglich sind. Mit anderen Worten ist der Stößel, vorzugsweise innerhalb des Führungselements, gegenüber dem Führungselement beweglich angeordnet, so dass Kräfte, welche seitens des Kraftumlenkelements bzw. des Stellelements auf das Führungselement wirken, nicht zwangsweise auch auf den Stößel wirken müssen. Vielmehr kann das Führungselement gegenüber dem Stößel von derartigen Kräften bewegt werden, so dass diese Kräfte vom Stößel und damit auch vom Stellventil bzw. dessen Ventilstößel ferngehalten werden können, um das Stellventil bzw. dessen Ventilstößel nicht zu belasten. Dies dabei federbelastet umzusetzen kann es ermöglichen, dass eine überschüssige Kraft von der Stößelfeder aufgenommen , der Relativbewegung von Führungselement und Stößel somit entgegenwirken und die Relativbewegung entsprechend wieder rückgängig machen kann, wenn die überschüssige Kraft nicht mehr vorliegt. Die Stößelfeder kann hierzu als Zug- oder als Druckfeder umgesetzt werden.

Gemäß einem weiteren Aspekt der Erfindung weist der NO-Stellantrieb ein Verbindungselement auf, welches ausgebildet ist, den NO-Stellantrieb feststehend mit dem Stellventil zu verbinden. Dies kann die feststehende Montage des NO-Stellantriebs an dem Stellventil ermöglichen.

Die vorliegende Erfindung betrifft auch einen Fluidverteiler, vorzugsweise einen Heizkreisverteiler, mit wenigstens einem Stellventil mit einem Normally-Open-(NO-)Stellantrieb wie zuvor beschrieben. Ein derartiger Fluidverteiler kann insbesondere ein Heizkreisverteiler einer Fußbodenheizung, einer Warmwasserheizungsanlage oder ein Heizkörper bzw. ein Radiator einer Warmwasserheizungsanlage sein. Hierdurch kann ein Fluidverteiler geschaffen werden, um die zuvor genannten Eigenschaften und Vorteile eines erfindungsgemäßen NO-Stellantriebs umsetzen und nutzen zu können.

Ein Ausführungsbeispiel und weitere Vorteile der Erfindung werden nachstehend im Zusammenhang mit den folgenden Figuren rein schematisch dargestellt und näher erläutert. Darin zeigt:
- Figur 1: eine schematische Schnittdarstellung eines Stellventils eines Fluidverteilers gemäß dem Stand der Technik;
- Figur 2: eine schematische Schnittdarstellung eines mit dem Stellventil verbundenen NO-Stellantriebs gemäß dem Stand der Technik in einer geöffneten Stellung des Stellventils;
- Figur 3: die Darstellung der Figur 2 in einer geschlossenen Stellung des Stellventils;
- Figur 4: die Darstellung der Figur 2 in einer vollständig ausgefahrenen Stellung eines Kolbens eines Dehnstoffelements des NO-Stellantriebes;
- Figur 5: eine schematische Schnittdarstellung eines mit dem Stellventil verbundenen erfindungsgemäßen NO-Stellantriebs in einer geöffneten Stellung des Stellventils;
- Figur 6: die Darstellung der Figur 5 in einer geschlossenen Stellung des Stellventils;
- Figur 7: die Darstellung der Figur 5 in einer vollständig ausgefahrenen Stellung eines Kolbens eines Dehnstoffelements des NO-Stellantriebes; und
- Figur 8: eine Detailsdarstellung der Figur 7.

Die o.g. Figuren werden in zylindrischen Koordinaten betrachtet. Es erstreckt sich eine Längsachse X. Senkrecht zur Längsachse X erstreckt sich eine radiale Richtung R von der Längsachse X weg. Senkrecht zur radialen Richtung R und um die Längsachse X herum erstreckt sich eine Umfangsrichtung U.

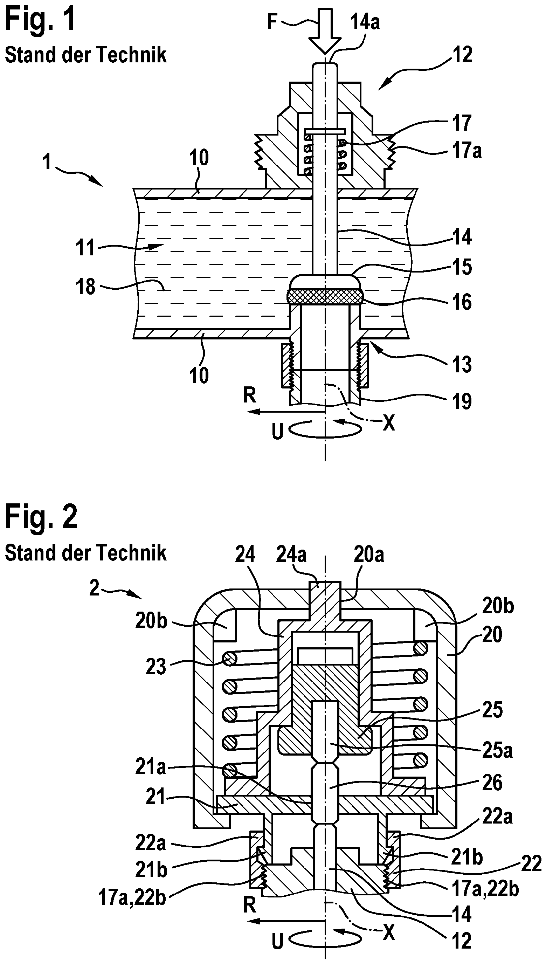

Figur 1 zeigt eine schematische Schnittdarstellung eines Stellventils 12 eines Fluidverteilers 1 gemäß dem Stand der Technik. Der Fluidverteiler 1 wird am Beispiel eines Heizkreisverteilers 1 einer Heizungsanlage betrachtet. Der Heizkreisverteiler 1 weist eine Wandung 10 auf, welche einen Innenraum 11 als Innenvolumen 11 umschließt. Innerhalb des Innenraums 11 befindet sich ein Fluid 18 in Form von Heizungswasser 18.

Der Heizkreisverteiler 1 weist mehrere Stellventile 12 auf, welche nebeneinander angeordnet sind und von denen lediglich ein Stellventil 12 in der Figur 1 dargestellt ist. Das Stellventil 12 weist einen Leitungsanschluss 13 auf, welcher in der Darstellung der Figur 1 nach unten hin durch die Wandung 10 des Heizkreisverteilers 1 hindurchführt. Am unteren bzw. äußeren Ende des Leitungsanschlusses 13 ist eine Fluidleitung 19 in Form eines Rohrs 19 angeschlossen. Das Stellventil 12 weist einen Ventilstößel 14 in Form eines zylindrischen Stabes auf, welcher durch das Heizungswasser 18 hindurchgeführt wird und sich an seinem unteren, dem Leitungsanschluss 13 zugewandten Ende zu einem kreisrunden Ventilteller 15 radial aufweitet. Dem Leitungsanschluss 13 zugewandt weist der Ventilteller 15 randseitig eine ringförmige Ventildichtung 16 aus einem elastischen Material auf.

Außerhalb der Wandung 10 des Heizkreisverteilers 1 ist das Stellventil 12 derart von außen auf der Wandung 10 feststehend angeordnet, dass sich der Ventilstößel 14 entlang der Längsachse X durch das Stellventil 12 hindurch und mit seiner Oberkante 14a nach oben aus dem Stellventil 12 heraus erstreckt. Innerhalb des Stellventils 12 ist eine Rückstellfeder 17 als Ventilfeder 17 angeordnet und derart mit dem Stellventil 12 und dem Ventilstößel 14 verbunden, dass der Ventilstößel 14 entlang der Längsachse X von der Federkraft F der Rückstellfeder 17 vom Leitungsanschluss 13 weg bewegt werden und der Leitungsanschlusses 13 somit fluidführend geöffnet werden kann. An seiner zylindrischen Außenfläche weist das Stellventil 12 ein Anschlussgewinde 17a auf, an welchem ein Stellantrieb 2 befestigt werden kann.

Zur Betätigung des Stellventils 12 kann nun ein bekannter Stellantrieb 2 wie in den Figuren 2 bis 4 dargestellt verwendet werden. Hierbei handelt es sich um einen sog. Normally-Open-Stellantrieb 2, kurz NO-Stellantrieb 2, welcher im unbetätigten Zustand keine Kraft auf den Ventilstößel 14 des Stellventils 12 ausübt, so dass die Rückstellfeder 17 des Stellventils 12 dessen Ventilstößel 14 samt Ventilteller 15 und Ventildichtung 16 entlang der Längsachse X vom oberen Ende des Leitungsanschlusses 13 weg drückt bzw. weg zieht und somit das Rohr 19 freigibt, um das Heizungswasser 18 strömen zu lassen.

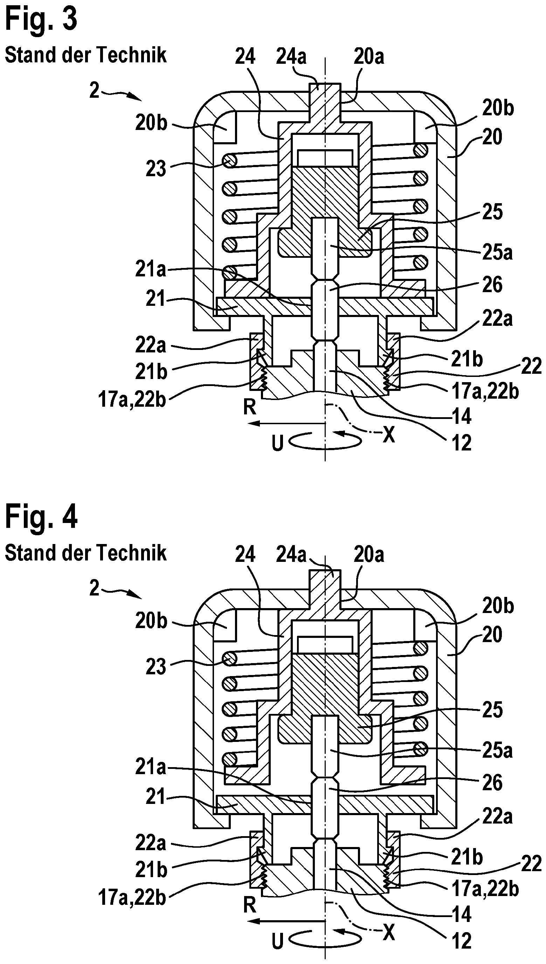

Figur 2 zeigt dabei eine schematische Schnittdarstellung eines mit dem Stellventil 12 verbundenen NO-Stellantriebs 2 gemäß dem Stand der Technik in einer geöffneten Stellung des Stellventils 12. Figur 3 zeigt die Darstellung der Figur 2 in einer geschlossenen Stellung des Stellventils 12. Figur 4 zeigt die Darstellung der Figur 2 in einer vollständig ausgefahrenen Stellung eines Kolbens 25a eines Dehnstoffelements 25 des NO-Stellantriebes 2.

Der bekannte NO-Stellantrieb 2 weist ein Gehäuse 20 auf, welches im Wesentlichen zylindrisch um die Längsachse X herum ausgebildet ist sowie dem Stellventil 12 abgewandt kuppelartig geschlossen ist, bis auf eine Gehäuseöffnung 20a auf der Längsachse X. Innenseitig weist das Gehäuse 20 im oberen Bereich, d.h. dem Stellventil 12 abgewandt, einen ringförmigen Federelementanschlag 20b auf. Das dem Stellventil 12 zugewandte offene Ende des Gehäuses 20 wird von einem im Wesentlichen kreisrunden scheibenartigen Halterungselement 21 abgeschlossen, bis auf eine Stößelöffnung 21a des Halterungselements 21 auf der Längsachse X. Es erstrecken sich mehrere in der Umfangsrichtung U zueinander beabstandete und gleichmäßig verteilte Haltenasen 21b des Halterungselements 21 zum Stellventil 12 hin. Die Haltenasen 21b des Halterungselements 21 können federelastisch nach radial innen gebogen werden, um hinter eine in Umfangsrichtung U verlaufende und radial nach innen zeigende entsprechende Haltenasenaufnahme 22a eines ringartigen zylindrischen Verbindungselements 22 zu greifen. Entlang der Längsrichtung X der Haltenasenaufnahme 22a des Verbindungselements 22 gegenüberliegend weist das Verbindungselement 22 ein Innengewinde 22b auf. Mit seinem Innengewinde 22b wird das Verbindungselement 22 mit dem Anschlussgewinde 17a des Stellventils 12 verbunden und so der bekannte NO-Stellantrieb 2 auf dem Stellventil 12 gehalten.

Innerhalb des Gehäuses 20 des bekannten NO-Stellantriebs 2 ist um die Längsachse X herum ein Federelement 23 als Druckfeder 23 in Form einer Spiralfeder 23 angeordnet, welche entlang der Längsachse X vom Stellventil 12 wegzeigend zusammengedrückt werden kann. Hierzu liegt die Spiralfeder 23 entlang der Längsachse X dem Stellventil 12 abgewandt an dem ringförmigen Federelementanschlag 20b des Gehäuses 20 an. Die gegenüberliegende Seite der Spiralfeder 23 liegt an einem Führungselement 24 des NO-Stellantriebs 2 an. Das Führungselement 24 ist im Wesentlichen zylindrisch ausgebildet, mit mehreren Stufen (nicht bezeichnet) entlang der Längsachse X sowie mit einem geschlossenen oberen Ende, welches einen axialen Vorsprung 24a des Führungselements 24 und damit auch des bekannten NO-Stellantriebs 2 bildet.

Im Übrigen ist das Führungselement 24 hohl ausgebildet, so dass das Führungselement 24 einen stufenförmigen zylindrischen Innenraum (nicht bezeichnet) bildet. Innerhalb des Innenraums des Führungselements 24 ist entlang der Längsachse X ein Stellelement 25 in Form eines Dehnstoffelements 25 angeordnet, welches elektrisch gespeist (nicht dargestellt) werden kann, um elektrisch erwärmt zu werden und hierdurch entlang der Längsachse X zum Stellventil 12 hin eine Längenänderung zu erzeugen. Mittels dieser Längenänderung des erwärmbaren Dehnstoffelements 25 kann ein Kolben 25a des Dehnstoffelements 25 entlang der Längsachse X zum Stellventil 12 hin bewegt werden. Der Kolben 25a des Dehnstoffelements 25 steht dabei im am Stellventil 12 montierten Zustand des bekannten NO-Stellantriebs 2 entlang der Längsachse X in berührendem Kontakt mit einem zylindrischen Stößel 26 des bekannten NO-Stellantriebs 2, welcher innerhalb der entsprechenden Stößelöffnung 21a des Halterungselements 21 angeordnet ist. Der Stößel 26 steht entlang der Längsachse X gegenüberliegend in berührendem Kontakt mit dem Ventilstößel 14 des Stellventils 12. Mittels des Stößels 26 des bekannten NO-Stellantriebs 2 kann somit eine Übertragung von Druckkräften entlang der Längsachse X in beide Richtungen erfolgen.

Ist bei dem bekannten NO-Stellantrieb 2 das Dehnstoffelement 25 unbestromt, so befindet sich der Kolben 25a des Dehnstoffelements 25 entlang der Längsachse X in seiner obersten Stellung und übt keine Kraft über den Stößel 26 des bekannt NO-Stellantriebs 2 auf den Ventilstößel 14 des Stellventils 12 auf. Da der Ventilstößel 14 des Stellventils 12 stets von seiner Ventilfeder 17 entlang der Längsachse X nach oben bzw. nach außen gedrückt wird und der Federkraft der Ventilfeder 17 des Stellventils 12 vom Dehnstoffelement 25 des Stellantriebs 2 in diesem Fall keinerlei Kraft entgegenwirkt, wird der Ventilstößel 14 samt Ventilteller 15 und Ventildichtung 16 von der Ventilfeder 17 entlang der Längsachse X vom oberen Ende des Leitungsanschlusses 13 weg gedrückt und das Rohr 19 somit freigegeben. Dies kann als offene Stellung des Stellventils 12 bezeichnet werden, siehe Figur 2. Da die offene Stellung des Stellventils 12 vorliegt, wenn das Dehnstoffelement 25 des bekannten NO-Stellantriebs 2 nicht bestromt wird, stellt der bekannte NO-Stellantrieb 2 einen bekannten Normally-Open-Stellantrieb 2 dar.

Wird nun das Dehnstoffelement 25 des bekannten NO-Stellantriebs 2 ausreichend bestromt, um das Stellventil 12 vollständig zu schließen, so wird der Kolben 25a des Dehnstoffelements 25 entsprechend weit entlang der Längsachse X zum Stellventil 12 hin gedrückt. Diese Druckkraft des Dehnstoffelements 25 wird von dessen Kolben 25a auf den Stößel 26 des bekannten NO-Stellantriebs 2 und von diesem über den Ventilstößel 14 des Stellventils 12 auf dessen Ventilfeder 17 übertragen, welche der Kraft des Dehnstoffelements 25 des bekannten NO-Stellantriebs 2 entgegenwirkt. Dabei kann über das Maß der Erwärmung des Dehnstoffelements 25 die Kraft reguliert werden, welche auf die Ventilfeder 17 des Stellventils 12 wirken soll. Hierdurch kann die Kraft der Ventilfeder 17 des Stellventils 12 stufenlos von der Kraft des Dehnstoffelements 25 des bekannten NO-Stellantriebs 2 überwunden und das obere Ende des Leitungsanschlusses 13 mittels des Ventilstößels 14 samt Ventilteller 15 und Ventildichtung 16 zunehmend reduziert bis vollständig geschlossen werden, siehe Figur 3.

Durch diesen Vorgang wird der axiale Vorsprung 24a des Führungselements 24 des bekannten NO-Stellantriebs 2 nicht entlang der Längsachse X bewegt, da die Federkraft der Spiralfeder 23 des bekannten NO-Stellantriebs 2 ausreichend größer ist als die Federkraft der Ventilfeder 17 des Stellventils 12. Es lässt sich somit anhand der Stellung des axialen Vorsprungs 24a des Führungselements 24 des bekannten NO-Stellantriebs 2 relativ zu dessen Gehäuse 20 bzw. Gehäuseöffnung 20a, vgl. Figuren 2 bis 4, für einen Benutzer nicht erkennen, welche Stellung der Ventilstößel 14 des Stellventils 12 hat.

Übersteigt dabei die Kraft, welche durch die Erwärmung des Dehnstoffelements 25 des bekannten NO-Stellantriebs 2 bewirkt wird, die Kraft der Ventilfeder 17 des Stellventils 12, so werden Beschädigungen des bekannten NO-Stellantriebs 2 dadurch vermieden, dass die weitere Längenänderung des Dehnstoffelements 25 entlang der Längsachse X vom Stellventil 12 wegzeigend eine Bewegung des Führungselements 25 bewirkt, welche entgegen der Federkraft der Spiralfeder 23 des bekannten NO-Stellantriebs 2 erfolgt. Somit wird die "überschüssige" Druckkraft des Dehnstoffelements 25 des bekannten NO-Stellantriebs 2 von dessen Spiralfeder 23 aufgenommen.

Hierdurch wird der axiale Vorsprung 24a des Führungselements 24 des bekannten NO-Stellantriebs 2 entlang der Längsachse X nach oben aus der Gehäuseöffnung 20a des Gehäuses 20 herausgedrückt, siehe Figur 4. Da bei einem Normally-Closed-Stellantrieb (nicht dargestellt) durch einen derartigen aus dem Gehäuse 20 bzw. aus dessen Gehäuseöffnung 20a nach oben hervorragenden axialen Vorsprung 24a ein vollständig geöffnetes Stellventil 12 angezeigt wird, bei dem bekannten NO-Stellantrieb 2 jedoch in diesem Fall das Stellventil 12 vollständig geschlossen ist, kann der aus dem Gehäuse 20 hervorragende axiale Vorsprung 24a des bekannten NO-Stellantriebs 2 vom Benutzer gegenteilig verstanden werden.

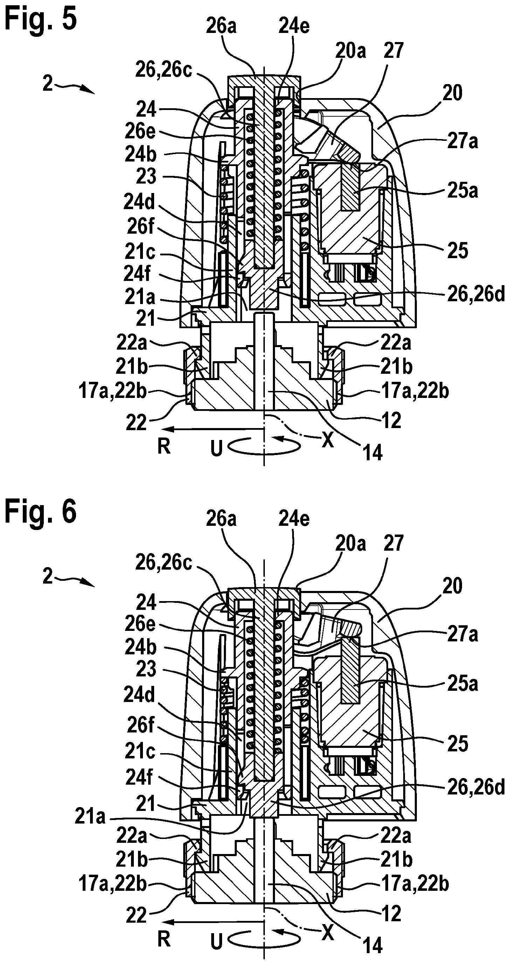

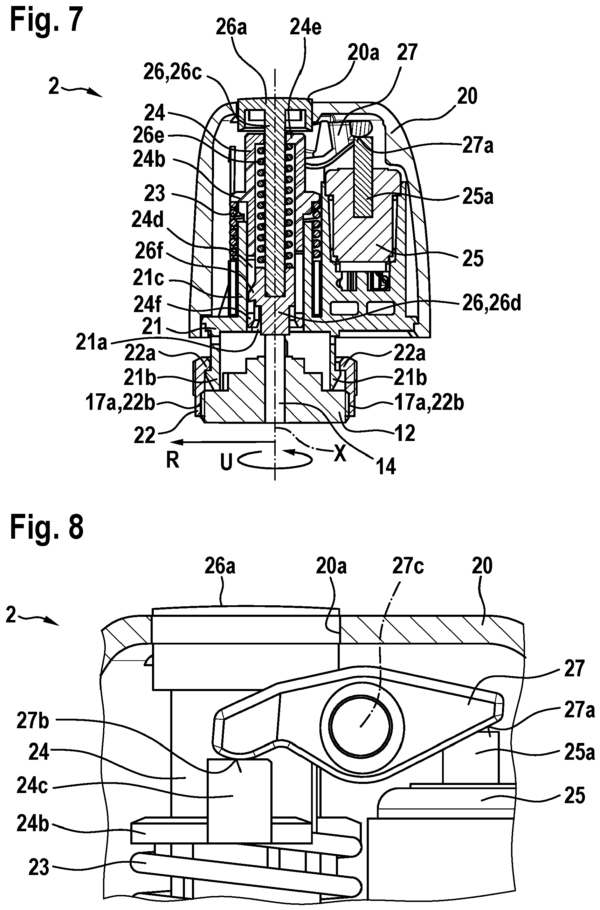

Figur 5 zeigt eine schematische Schnittdarstellung eines mit dem Stellventil 12 verbundenen erfindungsgemäßen NO-Stellantriebs 2 in einer geöffneten Stellung des Stellventils 12. Figur 6 zeigt die Darstellung der Figur 5 in einer geschlossenen Stellung des Stellventils 12. Figur 7 zeigt die Darstellung der Figur 5 in einer vollständig ausgefahrenen Stellung eines Kolbens 25a eines Dehnstoffelements 25 des NO-Stellantriebs 2. Figur 8 zeigt eine Detailsdarstellung der Figur 7. Der erfindungsgemäße NO-Stellantrieb 2 der Figuren 5 bis 8 ist grundsätzlich vergleichbar dem bekannten NO-Stellantrieb 2 der Figuren 2 bis 4 aufgebaut, weshalb lediglich auf die Unterschiede eingegangen wird.

Das Halterungselement 21 des erfindungsgemäßen NO-Stellantriebs 2 entspricht dem Halterungselement 21 des bekannten NO-Stellantriebs 2 mit einer radial größeren Stößelöffnung 21a sowie mit einer Hülse 21c in Form einer zylindrischen Erstreckung des Rands der Stößelöffnung 21a vom Stellventil 12 wegzeigend. Um die Hülse 21c des Halterungselements 21 herum ist ein Federelement 23 als Druckfeder 23 bzw. als Spiralfeder 23 angeordnet, welche sich entlang der Längsachse X am Halterungselement 21 abstützt und somit entlang der Längsachse X vom Stellventil 12 wegzeigend seine Druckkraft ausüben kann. Die Spiralfeder 23 umschließt die Hülse 21c des Halterungselements 21 und ragt entlang der Längsachse X über die Hülse 21c des Halterungselements 21 hinaus.

Innerhalb der Stößelöffnung 21a des Halterungselements 21 ist ein Führungselement 24 angeordnet, welches zylindrisch um die Längsachse X herum ausgebildet ist. Das Führungselement 24 weist etwa mittig entlang der Längsachse X einen umlaufenden radialen Vorsprung 24b auf, gegen den das andere Ende der Spiralfeder 23 anliegt. Somit kann das Führungselement 24 von der Spiralfeder 23 mittels Druckkraft entlang der Längsachse X vom Stellventil 12 weg gedrückt werden. Wird das Führungselement 24 in der entgegengesetzten Richtung bewegt, so wird hierdurch die Spiralfeder 23 zusammengedrückt.

Innerhalb der Durchgangsöffnung (nicht bezeichnet) des Führungselements 24 ist der Stößel 26 angeordnet, welcher ein oberes Stößelelement 26c und ein unteres Stößelelement 26d aufweist, welche z.B. mittels Schraubung oder Verrastung feststehend miteinander verbunden sind. Das untere Stößelelement 26d weist radial nach außen zeigend wenigstens eine Führungselementverbindung 26f in Form eines radialen Vorsprungs 26f auf, welche in eine korrespondierende Stößelaufnahme 24d des Führungselements 24 eingreift. Dabei erstreckt sich die Stößelaufnahme 24d des Führungselements 24 entlang der Längsachse X deutlich weiter als der radiale Vorsprung 26f des Stößels 26 bzw. des unteren Stößelelements 26d, so dass eine gewissen Relativbewegung entlang der Längsachse X zwischen Führungselements 24 und Stößel 26 bzw. unterem Stößelelement 26d ermöglicht wird.

Dabei ist zwischen dem Führungselement 24 und dem Stößel 26 bzw. dessen unterem Stößelelement 26d eine Stößelfeder 26e entlang der Längsachse X angeordnet, welche entlang der Längsachse X innen an einem radial nach innen zeigenden Kragen 24e des Führungselements 24 abstützend anliegt und sich entlang der Längsachse X bis zum Rand des unteren Stößelelements 26d erstreckt. Somit wird das untere Stößelelement 26d von der Stößelfeder 26e entlang der Längsachse X zum Stellventil 12 hin gedrückt, bis der radiale Vorsprung 26f des Stößels 26 bzw. des unteren Stößelelements 26d an der entsprechenden Kante 24f der Stößelaufnahme 24d des Führungselements 24 anliegt, siehe Figuren 5 und 6. In der entgegengesetzten Richtung kann entlang der Längsachse X gegen die Federkraft der Stößelfeder 26e eine Relativbewegung zwischen dem unteren Stößelelement 26d und dem Führungselement 24 stattfinden, so dass der radiale Vorsprung 26f des Stößels 26 bzw. des unteren Stößelelements 26d gegenüber der Kante 24f der Stößelaufnahme 24d des Führungselements 24 entlang der Längsachse X beabstandet werden kann, siehe Figur 7, wie weiter unten noch näher erläutert werden wird.

Der Stößel 26 bzw. dessen unteres Stößelelement 26d steht auch bei dem erfindungsgemäßen NO-Stellantrieb 2 im am Stellventil 12 montierten Zustand entlang der Längsachse X in berührendem Kontakt mit dem Ventilstößel 14 des Stellventils 12, so dass auch in diesem Fall eine Übertragung von Druckkräften entlang der Längsachse X in beide Richtungen erfolgen kann.

Das entlang der Längsachse X gegenüberliegende Ende des Stößels 26 bzw. des oberen Stößelelements 26c stellt eine Hubanzeige 26a des erfindungsgemäßen NO-Stellantriebs 2 dar, wie sie bei bekannten NC-Stellantrieben verwendet wird. Somit kann die Stellung des Stößels 26 und damit auch des Stellventils 12 entlang der Längsachse X dadurch vom Benutzer abgelesen werden, ob die äußere Oberfläche der Hubanzeige 26a mit der entsprechende äußeren Oberfläche des Gehäuses 20 bündig abschließt, siehe Figuren 6 und 7, oder entlang der Längsachse X vom Stellventil 12 wegzeigend nach oben aus der Gehäuseöffnung 20a hervorragt, siehe Figur 5.

Um nun die Hubanzeige 26a samt Stößel 26 trotz des Funktionsprinzips eines Normally-Open-Stellantriebs wie bei einem Normally-Closed-Stellantrieb verwenden zu können, ist bei dem erfindungsgemäßen NO-Stellantrieb 2 das Stellelement 25 parallel zu Längsachse X, d.h. neben der Längsachse X, derart angeordnet, dass die Druckkraft des Stellelements 25 vom Stellventil 12 weg zeigt. Die Umsetzung des Stellelements 25 erfolgt ebenfalls als Dehnstoffelement 25 mit Kolben 25a.

Um die Druckkraft vom Kolben 25a des Dehnstoffelements 25 auf den Stößel 26 und damit auf das Stellventil 12, und umgekehrt, übertragen zu können, ist erfindungsgemäß ein Kraftumlenkelement 27 in Form eines Hebelelements 27 vorgesehen, welches etwa mittig mittels einer Drehachse 27c, siehe Figur 8, drehbar an der Innenseite des Gehäuses 20 gelagert ist. Mit seinem einen Ende steht das Hebelelement 27 mittels einer Kontaktfläche 27a mit dem Kolben 25a des Dehnstoffelements 25 in Kontakt, siehe Figur 8, um vom Kolben 25a gedrückt zu werden, wenn das Dehnstoffelement 25 entsprechend elektrisch betrieben bzw. erwärmt wird.

Mit seinem anderen, gegenüberliegenden Ende steht das Hebelelement 27 mittels eines U-förmig ausgebildeten Paares von Kontaktflächen 27b mit dem Führungselement 24 in Kontakt, siehe Figur 8. Das Führungselement 24 weist hierzu jeweils eine Hebelelementaufnahme 24c in Form eines entlang der Längsachse X vom Stellventil 12 wegzeigenden Vorsprungs 24c auf, gegen dessen entlang der Längsachse X vom Stellventil 12 wegzeigenden Rand das Hebelelement 27 mittels seiner entsprechenden Kontaktflächen 27b anliegt. Die Kontaktflächen 27b des Hebelelements 27 umgreifen somit das Führungselement 24 seitlich auf beiden Seiten U-förmig. Hierdurch kann ein beweglicher berührender Kontakt dieses Endes des Hebelelements 27 mit dem Führungselement 24 hergestellt werden, um Druckkräfte entlang der Längsachse X in beide Richtungen zu übertragen. Dabei wirkt entlang der Längsachse X sowohl die Spiralfeder 23 als auch die Stößelfeder 26d dem Hebelelement 27 und damit dem Dehnstoffelement 25 entgegen, wie weiter unten näher beschrieben werden wird.

Ist das Dehnstoffelement 25 nicht betätigt und der erfindungsgemäße NO-Stellantrieb 2 auf dem Stellventil 12 montiert, siehe Figur 5, so ist der Kolben 25a in das Dehnstoffelement 25 eingefahren bzw. wird nicht aus dem Dehnstoffelement 25 nach oben herausgedrückt. Entsprechend übt das Dehnstoffelement 25 keine Druckkraft auf die entsprechende Kontaktfläche 27a des Hebelelements 27 auf. Vielmehr stützt sich die Spiralfeder 23 entlang der Längsachse X am Halterungselement 21 ab und drückt von unten gegen den radialen Vorsprung 24b des Führungselements 24, wodurch das Führungselement 24 vom Stellventil 12 weggedrückt wird. Hierdurch übt das Führungselement 24 eine Druckkraft auf die entsprechenden Kontaktflächen 27b des Hebelelements 27 auf, wodurch der Kolben 25a in das Dehnstoffelement 25 eingedrückt wird.

In diesem Zustand liegt der Ventilstößel 14 des Stellventils 12 entlang der Längsachse X an der korrespondierenden Kontaktfläche (nicht bezeichnet) des Stößels 26 bzw. dessen unterem Stößelelements 26d an (nicht dargestellt) oder ist hierzu geringfügig entlang der Längsachse X beabstandet, siehe Figur 5. In jedem Fall wird seitens des Ventilstößels 14 des Stellventils 12 entlang der Längsachse X keine Druckkraft auf den Stößel 26 des erfindungsgemäßen NO-Stellantriebs 2 ausgeübt und umgekehrt.

Auch wird das untere Stößelelement 26d von der Stößelfeder 26e entlang der Längsachse X gegenüber dem Führungselement 24 weggedrückt, soweit die Stößelaufnahme 24d des Führungselements 24 und der radiale Vorsprung 26f des Stößels 26 bzw. des unteren Stößelelements 26d dies erlauben, siehe Figur 5. Entsprechend liegt in diesem Zustand des erfindungsgemäßen NO-Stellantriebs 2, wie bereits zuvor erwähnt, der radiale Vorsprung 26f des Stößels 26 bzw. des unteren Stößelelements 26d an der Kante 24f der Stößelaufnahme 24d des Führungselements 24 an.

Hierdurch nimmt der unbetätigte erfindungsgemäße NO-Stellantrieb 2 die Stellung "normally open" sein. Entsprechend wird auch die Hubanzeige 26a des oberen Stößelelements 26c aus der Gehäuseöffnung 20a nach oben herausgeschoben und ragt nun deutlich aus dem Gehäuse 20 des erfindungsgemäßen NO-Stellantriebs 2 hervor, siehe Figur 5, so dass die geöffnete Stellung des Stellventils 12 vom Benutzer anhand der Hubanzeige 26a des erfindungsgemäßen NO-Stellantriebs 2 so abgelesen werden kann, wie es bei NC-Stellantrieben der Fall ist und wie dies beim bekannten NO-Stellantrieb 2 der Figuren 2 bis 4 nicht möglich ist.

Wird nun das Dehnstoffelement 25 zunehmend bestromt und hierdurch erwärmt, so wird der Kolben 25a vom Dehnstoffelement 25 immer weiter parallel zur Längsachse X vom Stellventil 12 wegzeigend bewegt und hierdurch eine Druckkraft auf das entsprechende Ende des Hebelelements 27 bzw. auf die entsprechende Kontaktfläche 27a des Hebelelements 27 ausgeübt, siehe Figur 6 und 8. Durch diese Druckkraft des Dehnstoffelements 25 wird das Hebelelement 27 um seinen Drehpunkt bzw. um seine Drehachse 27c geschwenkt, so dass das gegenüberliegende Ende des Hebelelements 27 bzw. das Paar von Kontaktflächen 27b des Hebelelements 27 das Führungselement 24 samt Stößel 26 entlang der Längsachse X zum Stellventil 12 hin drückt. Hierdurch wird zum einen der Ventilstößel 14 des Stellventils 12 bewegt und damit das Stellventil 12 zunehmend im Durchfluss verringert bzw. vollständig geschlossen. Zum anderen wird auch die Spiralfeder 23 gespannt, um bei einer Verringerung der Druckkraft des Dehnstoffelements 25 rückstellend auf das Führungselement 24 samt Stößel 26 und damit auch auf das Hebelelement 27 zu wirken.

Ferner wird hierdurch auch die Hubanzeige 26a entlang der Längsachse X im Wesentlichen in das Gehäuse 20 hineinbewegt, bis das Stellventil 12 vollständig geschlossen ist sowie die Hubanzeige 26a im Wesentlichen in das Gehäuse 20 hineinbewegt ist und mit der Gehäuseöffnung 20a bis auf ca. 0,5 mm bis ca. 1,0 mm bündig abschließt, siehe Figur 6. Entsprechend kann auch die geschlossene Stellung des Stellventils 12 vom Benutzer anhand der Hubanzeige 26a des erfindungsgemäßen NO-Stellantriebs 2 so abgelesen werden kann, wie es bei NC-Stellantrieben der Fall ist und wie dies beim bekannten NO-Stellantrieb 2 der Figuren 2 bis 4 nicht möglich ist. Der Kontakt des radialen Vorsprungs 26f des Stößels 26 bzw. des unteren Stößelelements 26d mit der Kante 24f der Stößelaufnahme 24d des Führungselements 24 bleibt während der gesamten Dauer diese Bewegung bestehen, vgl. Figuren 5 und 6.

Wird das Dehnstoffelement 25 weiterhin bzw. über die Stellung der Figur 6 hinaus bestromt und erwärmt, so erhöht sich die Druckkraft des Kolbens 25a auf das Hebelelement 27, siehe Figur 7, welche somit auch entlang der Längsachse X zum Stellventil 12 hin ausgeübt wird. Da das Stellventil 12 jedoch bereits vollständig geschlossen ist, vgl. Figur 6, kann das Stellventil 12 bzw. dessen Ventilstößel 14 und Rückstellfeder 17 diese zusätzliche Druckkraft des Dehnstoffelements 25 nicht mehr aufnehmen.

Hierzu ist die bereits erwähnte Stößelfeder 26e zwischen Stößel 26 und Führungselement 24 vorgesehen und das Führungselement 24 ist entlang der Längsachse X gegenüber dem Stößel 26 in einem gewissen Maß beweglich. Entsprechend kann nun das Führungselement 24 entlang der Längsachse X gegenüber dem Stößel 26 weiter zum Stellventil 12 hin gedrückt werden, ohne den Stößel 26 bzw. dessen unteres Stößelelement 26d zu bewegen bzw. auf dieses zu drücken, wodurch eine ungewollte weitere Kraftübertragung vom Dehnstoffelement 25 auf das Stellventil 12 vermieden werden kann. Auch kann die Hubanzeige 26a entlang der Längsachse X unverändert bleiben, um ihren Zweck wie zuvor beschrieben weiterhin zu erfüllen. Dabei wird der Kontakt zwischen dem radialen Vorsprung 26f des Stößels 26 bzw. des unteren Stößelelements 26d und der Kante 24f der Stößelaufnahme 24d des Führungselements 24 aufgehoben, so dass der radiale Vorsprung 26f des Stößels 26 bzw. des unteren Stößelelements 26d nun entlang der Längsachse X zu beiden Seiten innerhalb der Stößelaufnahme 24d gegenüber dem Führungselements 24 beabstandet ist, siehe Figur 7.

Wird nun später die Bestromung bzw. die Erwärmung des Dehnstoffelements 25 wieder reduziert, so nimmt auch die Druckkraft auf das Führungselement 24 ab. Dann kann das Führungselement 24 von der Stößelfeder 26e wieder entlang der Längsachse X vom Stellventil 12 weg bewegt werden, bis die Konstellation der Figur 6 wieder erreicht ist.

### BEZUGSZEICHENLISTE (Teil der Beschreibung)

- F: Federkraft der Rückstellfeder 17
- R: radiale Richtung
- U: Umfangsrichtung
- X: Längsachse

- 1: Fluidverteiler; Heizkreisverteiler
- 10: Wandung
- 11: Innenraum; Innenvolumen
- 12: Stellventil
- 13: Leitungsanschluss des Stellventils 12
- 14: Ventilstößel
- 14a: Oberkante des Ventilstößels 14
- 15: Ventilteller
- 16: Ventildichtung
- 17: Rückstellfeder; Ventilfeder
- 17a: Anschlussgewindes des Stellventils 12
- 18: Fluid; Heizungswasser
- 19: Fluidleitung; Rohr

- 2: Normally-Open-(NO-)Stellantrieb
- 20: Gehäuse
- 20a: Gehäuseöffnung bzw. Hubanzeigenöffnung des Gehäuses 20
- 20b: Federelementanschlag des Gehäuses 20
- 21: Halterungselement
- 21a: Stößelöffnung des Halterungselements 21
- 21b: Haltenasen des Halterungselements 21
- 21c: Hülse des Halterungselements 21
- 22: Verbindungselement
- 22a: Haltenasenaufnahme des Verbindungselements 22
- 22b: Innengewinde des Verbindungselements 22
- 23: Federelement; Druckfeder; Spiralfeder
- 24: Führungselement
- 24a: axialer Vorsprung des Führungselements 24
- 24b: radialer Vorsprung des Führungselements 24
- 24c: Hebelelementaufnahme bzw. Vorsprünge des Führungselements 24
- 24d: Stößelaufnahme des Führungselements 24
- 24e: Kragen des Führungselements 24
- 24f: Kante der Stößelaufnahme 24d
- 25: Stellelement; Dehnstoffelement
- 25a: Kolben des Dehnstoffelements 25
- 26: Stößel
- 26a: Hubanzeige des Stößels 26
- 26c: oberes Stößelelement des Stößels 26
- 26d: unteres Stößelelement des Stößels 26
- 26e: Stößelfeder
- 26f: Führungselementverbindung bzw. radialer Vorsprung des Stößels 26 bzw. des unteren Stößelelements 26d
- 27: Kraftumlenkelement; Hebelelement
- 27a: Kontaktfläche des Kraftumlenkelements 27 gegenüber Stellelement 25 bzw. Kolben 25a
- 27b: Kontaktflächen des Kraftumlenkelements 27 gegenüber Führungselement 24
- 27c: Drehachse des Kraftumlenkelements 27

## Patentansprüche

1. Normally-Open-(NO-)Stellantrieb (2) für ein Stellventil (12)
mit einem Stellelement (25), welches ausgebildet ist, das Stellventil (12) mittels einer Kraft entlang der Längsachse (X) zu betätigen,
**dadurch gekennzeichnet, dass**
das Stellelement (25) ausgebildet ist, die Kraft abweichend zur Längsachse (X) auszuüben,
wobei ein Kraftumlenkelement (27) ausgebildet ist, die Kraft vom Stellelement (25) zu erhalten und mittels eines Stößels (26) entlang der Längsachse (X) auf das Stellventil (12) zu übertragen.

2. NO-Stellantrieb (2) nach Anspruch 1
mit einer Hubanzeige (26a), welche ausgebildet ist, eine Stellung des Stößels (26) entlang der Längsachse (X), vorzugsweise relativ zu einem Gehäuse (20), anzuzeigen.

3. NO-Stellantrieb (2) nach Anspruch 2,
wobei die Hubanzeige (26a) feststehend, vorzugsweise einstückig, mit dem Stößel (26) ausgebildet ist.

4. NO-Stellantrieb (2) nach einem der vorangehenden Ansprüche,
wobei das Stellelement (25) ausgebildet ist, die Kraft als Druckkraft parallel zur Längsachse (X) vom Stellventil (12) wegzeigend auszuüben.

5. NO-Stellantrieb (2) nach einem der vorangehenden Ansprüche,
wobei das Stellelement (25) ein Dehnstoffelement (25) ist, welches ausgebildet ist, durch elektrische Erwärmung das Stellventil (12) mittels der Kraft als Druckkraft entlang der Längsachse (X) zu betätigen.

6. NO-Stellantrieb (2) nach Anspruch 5,
wobei das Dehnstoffelement (25) ausgebildet ist, sich durch elektrische Erwärmung linear auszudehnen und hierdurch einen Kolben (25a) linear von sich weg zu bewegen,
wobei der Kolben (25a) ausgebildet ist, die lineare Ausdehnung des Dehnstoffelements (25) linear auf das Kraftumlenkelement (27) zu übertragen.

7. NO-Stellantrieb (2) nach einem der vorangehenden Ansprüche,
wobei das Kraftumlenkelement (27) ein Hebelelement (27) ist.

8. NO-Stellantrieb (2) nach einem der vorangehenden Ansprüche
mit einem Federelement (23), welches ausgebildet ist, der Kraft des Stellelements (25) entgegenzuwirken.

9. NO-Stellantrieb (2) nach Anspruch 8,
wobei das Federelement (23) im Kraftfluss zwischen dem Kraftumlenkelement (27) und dem Stellventil (12) angeordnet ist.

10. NO-Stellantrieb (2) nach Anspruch 9
mit einem Führungselement (24), welches ausgebildet ist, die Kraft des Federelements (23), vorzugsweise entlang der Längsachse (X), auf das Kraftumlenkelement (27) zu übertragen.

11. NO-Stellantrieb (2) nach Anspruch 10,
wobei das Führungselement (24) ferner ausgebildet ist, den Stößel (26) entlang der Längsachse (X) beweglich zu führen.

12. NO-Stellantrieb (2) nach Anspruch 11,
wobei das Führungselement (24) den Stößel (26) in der Umfangsrichtung (U) umschließt und
wobei das Federelement (23) das Führungselement (24) in der Umfangsrichtung (U) umschließt.

13. NO-Stellantrieb (2) nach einem der Ansprüche 10 bis 12,
wobei zwischen dem Führungselement (24) und dem Stößel (26) entlang der Längsachse (X) eine Stößelfeder (26e) angeordnet ist, so dass das Führungselement (24) und der Stößel (26) entlang der Längsachse (X) federbelastet zueinander beweglich sind.

14. NO-Stellantrieb (2) nach einem der vorangehenden Ansprüche
mit einem Verbindungselement (22), welches ausgebildet ist, den NO-Stellantrieb (2) feststehend mit dem Stellventil (12) zu verbinden.

15. Fluidverteiler (1), vorzugsweise Heizkreisverteiler (1),
mit wenigstens einem Stellventil (12) mit einem Normally-Open-(NO-)Stellantrieb (2) nach einem der vorangehenden Ansprüche.
